# EUROPÄISCHE PATENTSCHRIFT

(11) **EP 1 487 655 B1**
(45) Veröffentlichungstag und Bekanntmachung des Hinweises auf die Patenterteilung: **27.12.2006**
(21) Anmeldenummer: 03720192.8
(22) Anmeldetag: 17.03.2003
(51) Int. Cl.: B60K 15/035, F16K 24/04

(54) **VENTIL**
VALVE
SOUPAPE

(30) Priorität: 22.03.2002 DE 10212952; 31.10.2002 DE 10250923
(43) Veröffentlichungstag der Anmeldung: 22.12.2004
(73) Patentinhaber: SIEMENS AKTIENGESELLSCHAFT, 80333 München (DE)
(72) Erfinder: BAHL, Benoit, 57620 Götzenbruck (FR)
(86) Internationale Anmeldenummer: PCT/DE2003/000856
(87) Internationale Veröffentlichungsnummer: WO 2003/080380

(56) Entgegenhaltungen:
- EP-A- 0 674 129
- WO-A-99/28143
- DE-A- 19 736 841
- US-A- 4 351 350
- US-A- 5 267 470

## Beschreibung

Die Erfindung betrifft ein Ventil, welches zur Anordnung und zum Verschließen in einer flüssigen Kraftstoff führenden Leitung eines Kraftfahrzeuges vorgesehen ist, mit einem Ventilkörper und mit einem Ventilsitz, bei dem der Ventilkörper zumindest bei der Durchströmung der Leitung mit Kraftstoff auf Abstand zu dem Ventilsitz gehalten ist, wobei der Ventilkörper einen kegelförmigen, dem Ventilsitz gegenüberstehenden Abschnitt aufweist und eine im Verhältnis zu seinem Durchmesser geringe Wandstärke hat.

Ein solches Ventil ist aus DE 19 736 841 bekannt.

Solche Ventile werden bei heutigen Kraftfahrzeugen häufig als sogenannte Rolloverventile bezeichnet und sind aus der Praxis bekannt. Diese Ventile haben die Aufgabe, bei einem Crash oder einem Überschlag des Kraftfahrzeuges ein Auslaufen von Kraftstoff nach einem Abreißen der kraftstoffführenden Leitung zu verhindern. Die Kraft, die den Ventilkörper auf Abstand zu dem Ventilsitz hält, kann damit beispielsweise die Schwerkraft, eine Federkraft oder ein gummielastisches Element sein. Der Ventilkörper ist beispielsweise als Kugel oder als Entenschnabelventil gestaltet. Nachteilig bei dem bekannten Ventil ist, dass es sehr aufwändig zu fertigen ist.

Der Erfindung liegt das Problem zugrunde, ein Ventil der eingangs genannten Art so weiterzubilden, dass es möglichst einfach zu fertigen ist und ein Auslaufen von Kraftstoff bei einem Abreißen der kraftstoffführenden Leitung zuverlässig verhindert.

Dieses Problem wird erfindungsgemäß durch die Merkmale des Anspruchs 1 gelöst.

Durch diese Gestaltung hat der Ventilkörper ein besonders geringes Gewicht und lässt sich besonders kostengünstig fertigen. Die Fertigung des Ventilkörpers erfolgt vorzugsweise aus Kunststoff im Spritzgussverfahren. Durch die kegelförmige Gestaltung des Ventilkörpers wird dieser bei einem Abreißen der kraftstoffführenden Leitung zuverlässig von einer Strömung entgegen der Strömungsrichtung im Normalbetrieb erfasst und gegen den Ventilsitz gedrückt. Daher wird ein Auslaufen von Kraftstoff zuverlässig verhindert. Im Normalbetrieb drückt die Strömung den Ventilkörper von dem Ventilsitz weg. Durch die kegelförmige Gestaltung des Ventilkörpers wird dabei die Strömung nicht gedrosselt.

Ein Austritt von Kraftstoff durch Dichtstellen des erfindungsgemäßen Ventils in die Umgebung lässt sich zuverlässig vermeiden, wenn eine Führung für den Ventilkörper in einer mit dem Flansch verbundenen Führungshülse angeordnet ist und wenn die Führungshülse in montiertem Zustand des Flansches in den Kraftstoffbehälter hineinragt.

Die Montage des erfindungsgemäßen Ventils gestaltet sich besonders kostengünstig, wenn die Führungshülse an ihrem von dem Flansch abstehenden Ende mit einem Anschlussstutzen verbunden ist. Da der Anschlussstutzen für eine, beispielsweise innerhalb des Kraftstoffbehälters geführte Leitung ohnehin vorhanden ist, wird zudem der bauliche Aufwand durch die Anordnung des erfindungsgemäßen Ventils besonders gering gehalten.

Die zuverlässige Mitnahme des Ventilkörpers durch eine starke Strömung in dem erfindungsgemäßen Ventil lässt sich mit geringem baulichen Aufwand einfach erreichen, wenn sich an dem kegelförmigen Abschnitt des Ventilkörpers ein rohrförmiger Abschnitt anschließt und wenn der rohrförmige Abschnitt einen kleineren Durchmesser hat als die Führung.

Der Ventilkörper wird gemäß einer anderen vorteilhaften Weiterbildung der Erfindung zuverlässig in der Führung gegen den Ventilsitz geführt, wenn sich an dem rohrförmigen Abschnitt ein radial nach außen weisender Kragen anschließt.

Der Widerstand, den der Ventilkörper der Strömung des Kraftstoffs entgegensetzt, lässt sich gemäß einer anderen vorteilhaften Weiterbildung der Erfindung einfach einstellen, wenn zur Durchströmung mit Kraftstoff vorgesehene Ausnehmungen in dem rohrförmigen Abschnitt und/oder dem Kragen angeordnet sind.

Eine Fehlfunktion des erfindungsgemäßen Ventils lässt sich einfach vermeiden, wenn der Anschlussstutzen den Ventilkörper in seiner von dem Ventilsitz beabstandeten Lage hält. Die Halterung des Ventilkörpers an dem Anschlussstutzen kann formschlüssig oder kraftschlüssig erfolgen oder mit einer Sollbruchstelle erzeugt sein.

Das erfindungsgemäße Ventil gestaltet sich konstruktiv besonders einfach, wenn die Führungshülse und der Anschlussstutzen als einstückiges, mit dem Flansch verbundenes Bauteil ausgebildet sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen Teilbereich eines Kraftstoffbehälters mit einem erfindungsgemäßen Ventil,
- Fig.2: eine stark vergrößerte Darstellung eines Ventilkörpers des erfindungsgemäßen Ventils aus Figur 1.

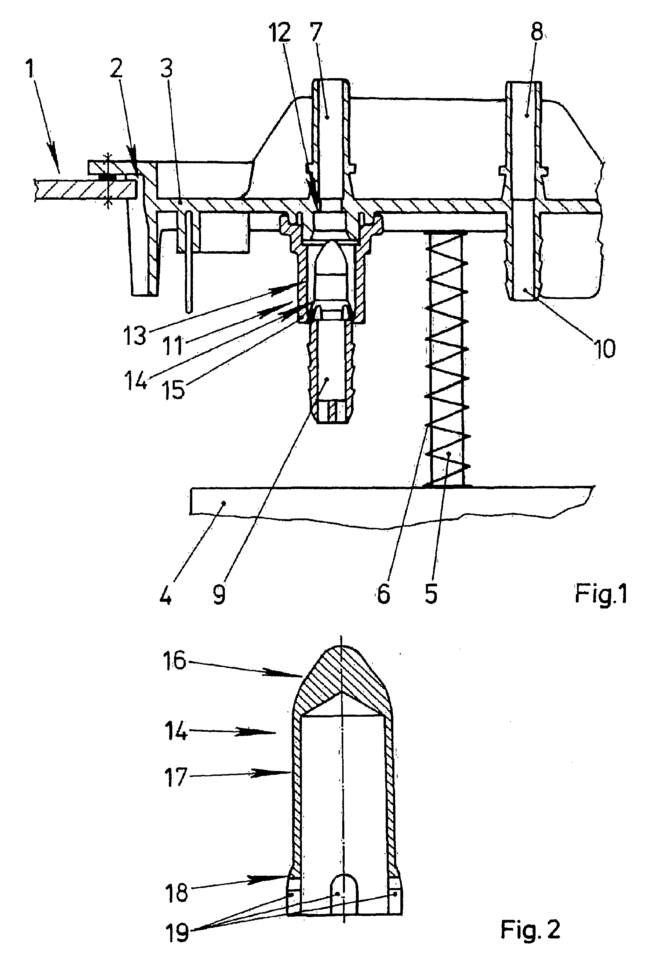

Figur 1 zeigt eine Schnittdarstellung durch einen Teilbereich eines Kraftstoffbehälters 1 mit einem in einer Montageöffnung 2 eingesetzten Flansch 3 und mit einem Schwalltopf 4 zur Aufnahme einer nicht dargestellten Kraftstoff-Förderpumpe. Der Schwalltopf 4 wird gegenüber dem Flansch 3 mittels eines Führungsrohrs 5 geführt und von einem Federelement 6 gegen den Boden des Kraftstoffbehälters 1 vorgespannt. Der Flansch 3 weist an seinen Stirnseiten jeweils zwei Anschlussstutzen 7 - 10 auf. Die Anschlussstutzen 7 - 10 dienen zum Anschluss einer Vorlaufleitung und einer Rücklaufleitung. In einem der an der zum Inneren des Kraftstoffbehälters 1 weisenden Seite angeordneten Anschlussstutzen 9 ist ein Ventil 11 angeordnet. Das Ventil 11 hat einen einstückig mit dem Flansch 3 gefertigten Ventilsitz 12 und einen in einer Führung 13 angeordneten Ventilkörper 14. Die Führung 13 ist in einer einstückig mit dem Anschlussstutzen 9 gefertigten Führungshülse 15 angeordnet. Der Ventilkörper 14 wird von dem Anschlussstutzen 9 in seiner von dem Ventilsitz 12 beabstandeten Lage gehalten.

Figur 2 zeigt stark vergrößert den Ventilkörper 14 in einer Schnittdarstellung. Der Ventilkörper 14 hat einen kegelförmigen Abschnitt 16 und einen sich daran anschließenden rohrförmigen Abschnitt 17. Das dem kegelförmigen Abschnitt 16 abgewandte Ende des rohrförmigen Abschnitts 17 trägt einen radial abstehenden Kragen 18 mit Ausnehmungen 19 zum Durchströmen des Kraftstoffs. Der Kragen 18 weist einen ungefähr den Abmessungen der Führung 13 entsprechenden Außendurchmesser auf.

## Patentansprüche

1. Ventil, welches zur Anordnung und zum Verschließen in einer flüssigen Kraftstoff führenden Leitung eines Kraftfahrzeuges vorgesehen ist, mit einem Ventilkörper (14) und mit einem Ventilsitz (12), bei dem der Ventilkörper (14) zumindest bei der Durchströmung der Leitung mit Kraftstoff auf Abstand zu dem Ventilsitz (12) gehalten ist, wobei der Ventilkörper (14) einen kegelförmigen, dem Ventilsitz (12) gegenüberstehenden Abschnitt (16) aufweist und eine im Verhältnis zu seinem Durchmesser geringe Wandstärke hat **dadurch gekennzeichnet, dass** der Ventilsitz (12) einstückig mit dem eine Montageöffnung (2) des Kraftstoffbehälters (1) verschließenden Flansch (3) gefertigt ist, wobei der Flansch (3) an seinen Stirnseiten jeweils zwei Anschlussstutzen (7 - 10) zum Anschluss einer Vorlaufleitung und einer Rücklaufleitung aufweist.

2. Ventil nach Anspruch 1, **dadurch gekennzeichnet, dass** eine Führung (13) für den Ventilkörper (14) in einer mit dem Flansch (3) verbundenen Führungshülse (15) angeordnet ist und dass die Führungshülse (15) in montiertem Zustand des Flansches (3) in den Kraftstoffbehälter (1) hineinragt.

3. Ventil nach Anspruch 2, **dadurch gekennzeichnet, dass** die Führungshülse (15) an ihrem von dem Flansch (3) abstehenden Ende mit einem Anschlussstutzen (9) verbunden ist.

4. Ventil nach Anspruch 2 oder 3, **dadurch gekennzeichnet, dass** sich an dem kegelförmigen Abschnitt (16) des Ventilkörpers (14) ein rohrförmiger Abschnitt (17) anschließt und dass der rohrförmige Abschnitt (17) einen kleineren Durchmesser hat als die Führung (13).

5. Ventil nach Anspruch 4, **dadurch gekennzeichnet, dass** sich an dem rohrförmigen Abschnitt (17) ein radial nach außen weisender Kragen (18) anschließt.

6. Ventil nach Anspruch 4 oder 5, **dadurch gekennzeichnet, dass** zur Durchströmung mit Kraftstoff vorgesehene Ausnehmungen (19) in dem rohrförmigen Abschnitt (17) und/oder dem Kragen (18) angeordnet sind.

7. Ventil nach Anspruch 3, **dadurch gekennzeichnet, dass** der Anschlussstutzen (9) den Ventilkörper (14) in seiner von dem Ventilsitz (12) beabstandeten Lage hält.

8. Ventil nach Ansprüche 2 und 3, **dadurch gekennzeichnet, dass** die Führungshülse (15) und der Anschlussstutzen (9) als einstückiges, mit dem Flansch (3) verbundenes Bauteil ausgebildet sind.

## Claims

1. Valve which is envisaged for arrangement and for closing in a liquid-fuel-conducting pipe of a motor vehicle, having a valve body (14) and having a valve seat (12), in which the valve body (14) is held at a distance from the valve seat (12) at least when fuel flows through the pipe, the valve body (14) having a conical section (16) opposite the valve seat (12) and having a small wall thickness in relation to its diameter **characterized in that** the valve seat (12) is manufactured as a single piece together with the flange (3) closing the installation opening (2) of the fuel tank (1), the flange (3) having two connecting pipes (7-10) in each case on its end sides, for the connection of a forward flow line and a return flow line.

2. Valve according to Claim 1, **characterized in that** a guide (13) for the valve body (14) is arranged in a guide sleeve (15) connected to the flange (3), and **in that** when the flange (3) is fitted, the guide sleeve (15) protrudes into the fuel tank (1).

3. Valve according to Claim 2, **characterized in that** the guide sleeve (15) is connected at its end projecting away from the flange (3) to a connecting pipe (9).

4. Valve according to Claim 2 or 3, **characterized in that** a tubular section (17) adjoins the conical section (16) of the valve body (14), and **in that** the tubular section (17) has a smaller diameter than the guide (13).

5. Valve according to Claim 4, **characterized in that** a radially outwardly pointing collar (18) adjoins the tubular section (17).

6. Valve according to Claim 4 or 5, **characterized in that** recesses (19) provided for fuel to flow through are arranged in the tubular section (17) and/or the collar (18).

7. Valve according to Claim 3, **characterized in that** the connecting pipe (9) keeps the valve body (14) in its position spaced apart from the valve seat (12).

8. Valve according to Claims 2 and 3, **characterized in that** the guide sleeve (15) and the connecting pipe (9) are designed as a single-piece component which is connected to the flange (3).

## Revendications

1. Soupape, qui est prévue pour être mise en place sur et pour fermer une conduite d'un véhicule automobile transférant du carburant liquide, comportant un corps de soupape (14) et un siège de soupape (12), où le corps de soupape (14) est maintenu à une certaine distance du siège de soupape (12) au moins lorsque la conduite est traversée par du carburant, le corps de soupape (14) comportant une partie en forme de cône (16) faisant face au siège de soupape (12) et ayant, par rapport à son diamètre, une paroi de faible épaisseur, **caractérisée par le fait que** le siège de soupape (12) est fabriqué en une seule pièce avec la bride (3) fermant une ouverture de montage (2) du réservoir à carburant (1), la bride (3) comportant, sur chacune de ses faces frontales deux manchons de raccordement (7 - 10) destinés au raccordement d'une conduite d'alimentation et d'une conduite de retour.

2. Soupape selon la revendication 1, **caractérisée par le fait qu'**un guidage (13) pour le corps de soupape (14) est disposé dans une douille de guidage (15) liée à la bride (3) et que la douille de guidage (15) fait saillie, dans l'état installé de la bride (3) dans le réservoir à carburant (1).

3. Soupape selon la revendication 2, **caractérisée par le fait que** la douille de guidage (15) est liée, à son extrémité dépassant de la bride (3), à un manchon de raccordement (9).

4. Soupape selon la revendication 2 ou 3, **caractérisée par le fait qu'**une partie en forme de tube (17) suit la partie en forme de cône (16) du corps de soupape (14) et que la partie en forme de tube (17) a un diamètre inférieur à celui du guidage (13).

5. Soupape selon la revendication 4, **caractérisée par le fait qu'**une collerette (18) tournée dans le sens radial vers l'extérieur suit la partie en forme de tube (17).

6. Soupape selon la revendication 4 ou 5, **caractérisée par le fait que** des évidements (19) prévus pour laisser passer le flux de carburant sont ménagés dans la partie en forme de tube (17) et/ou dans la collerette (18).

7. Soupape selon la revendication 3, **caractérisée par le fait que** le manchon de raccordement (9) maintient le corps de soupape (14) dans sa position à une certaine distance du siège de soupape (12).

8. Soupape selon les revendications 2 et 3, **caractérisée par le fait que** la douille de guidage (15) et le manchon de raccordement (9) sont conçus sous la forme d'une pièce unique liée à la bride (3).
